# EUROPEAN PATENT APPLICATION

(11) **EP 4 800 865 A1**
(43) Date of publication of application: **02.09.2026**
(21) Application number: 25160604.2
(22) Date of filing: 27.02.2025
(51) Int. Cl.: H02J 3/00

(54) **AN ELECTROLYZER POWER SUPPLY SYSTEM, A METHOD OF PRE-MAGNETIZING A TRANSFORMER, A COMPUTER PROGRAM, A COMPUTER-READABLE STORAGE MEDIUM, A COMPUTER AND/OR A CONTROLLER, A CONVERTER AND/OR A TRANSFORMER AND AN ELECTROLYSIS SYSTEM**

(71) Applicant: Siemens Energy Global GmbH & Co. KG, 81739 München (DE)
(72) Inventor: Craciun, Bogdan, 91052 Erlangen (DE); Schumann, Sven, 91452 Wilhermsdorf (DE); Herzig, Fabian, 64295 Darmstadt (DE)

(57) **Abstract**

The invention relates to pre-magnetizing a transformer (3) of an electrolyzer power supply system (2) and a corresponding method. The electrolyzer power supply system (2) comprises a transformer (3) and a converter (4), particularly a self-commutated converter, wherein the transformer (3) is adapted to convert an alternating current electrical power output (5) from an electrical grid (6) into an alternating current electrical power input (7) for the converter (4). The converter (4) is adapted to convert the alternating current electrical power input (7) from the transformer (3) into a direct current electrical power input (8) for an electrolyzer (9). For pre-magnetizing the transformer (3), the converter (4) is adapted to provide a pre-magnetization current (13) from a direct current source (10) to the transformer (3).

## Description

### Technical Field

The present invention relates to an electrolyzer power supply system, a method of pre-magnetizing a transformer, a computer program, a computer-readable storage medium, a computer and/or a controller, a converter and/or a transformer and an electrolysis system.

### Technological Background

In weak electrical grids with a relatively low short circuit ratio (SCR), connecting and starting an electrolysis plant is challenging. This is because a transformer inrush current of the electrolysis plant can be quite high when the system is connected to the electrical grid, triggering the safety devices that protect the system. Currently, the SCR of the electrical grid at the point of connection of the electrolysis plant can be increased by installing large and expensive synchronous condensers. However, these installations are relatively large and expensive.

### Summary of the invention

It is thus an object of the present invention to provide an improved electrolyzer power supply system having an improved pre-magnetization of the transformer, which particularly can provide transformer inrush currents which are suitable for electrical grids with a relatively low SCR.

A solution is provided by the subject matter according to the independent claims. Advantageous additional embodiments of the invention are described by the dependent claims, the following description and the figures.

The invention relates to an electrolyzer power supply system comprising a first transformer and a first converter, particularly a self-commutated converter, wherein the first transformer is adapted to convert an alternating current electrical power output from an electrical grid into an alternating current electrical power input for the first converter, wherein the first converter is adapted to convert the alternating current electrical power input from the first transformer into a direct current electrical power input for an electrolyzer.

According to the invention, the first converter is adapted to provide a first pre-magnetization current from a direct current source to the first transformer.

In other words, the first converter is adapted to be or to form a static synchronous compensator (STATCOM) by means of the direct current source, wherein the STATCOM particularly may be adapted to provide the first pre-magnetization current to the first transformer, particularly at a secondary winding of the first transformer. The first converter or the STATCOM, which may comprise the first converter and the direct current source, may be adapted to provide the first pre-magnetization current to at least one secondary winding of the first transformer.

The first pre-magnetization current may refer to an alternating current, particularly from the first converter, which may be less than an inrush current at a rated voltage of the first transformer, particularly at a primary winding of the first transformer. Thus, the first converter, particularly the STATCOM comprising the first converter and the direct current source, may be adapted to provide a reactive power to at least one secondary winding of the first transformer which may initiate a pre-magnetization of the first transformer, particularly with a reduced inrush current in relation to the inrush current at the rated voltage of the first transformer. For example, the first transformer may be a medium voltage to low voltage transformer. The converter may an insulated gate bipolar transistor (IGBT) converter. The direct current source may comprise a battery, particularly an emergency power supply or an uninterruptible power supply of electrolyzer, particularly of an electrolyzer controller.

Additionally, the converter or the STATCOM compising the first converter and the direct current source may be adapted to provide the first pre-magnetization current to at least one secondary winding of the first transformer.

The electrolyzer power supply system may comprise the direct current source, such as a battery, and/or may be adapted to be electrically connected to the direct current source, particularly at a direct current side of the first converter.

Additionally or alternatively, the direct current source may comprise a renewable electrical energy source such as a photovoltaic array.

Once the first transformer has been pre-magnetized, the electrolyze power supply system, particularly the first transformer and the first converter, may enter a grid connected mode, which comprises an operation of providing the direct current electrical power input to the electrolyzer for producing an energy carrier by means of an electrolysis process. The energy carrier may be hydrogen, for example.

This provides the advantage that the overall inrush current of the transformer, particularly of the first transformer, is reduced. This allows an improved start-up operation of an electrolysis plant or electrolysis system comprising said electrolyzer power supply system which is connected to an electrical grid with a relatively low SCR at the point of connection. Further, the use of the emergency power supply as the direct current source allows a retrofit installation by means of a software update.

The electrolyzer power supply system also includes embodiments by which additional advantages are obtained.

In one embodiment, the electrolyzer power supply system further comprises a second transformer and is adapted to electrically connect the first transformer and the second transformer, particularly in parallel with the electrical grid, for providing a second pre-magnetization current to the second transformer from the first transformer, particularly when the first transformer is pre-magnetized above a pre-magnetization threshold value. In other words, the electrolyzer power supply system may be adapted to electrically connect the first transformer and the second transformer with each other and particularly to the electrical grind, such that the second pre-magnetization current from the primary winding of the first transformer may be provided to the primary winding of the second transformer, when the first transformer is pre-magnetized above the pre-magnetization threshold value.

The second transformer may correspond to or comprise the same features as the first transformer. The second pre-magnetization current from the first transformer, particularly of the primary winding of the first transformer, may correspond to a current superposition of a magnetization current flowing from the primary winding of the first transformer to the second transformer and the current of the alternating current electrical power output flowing from the electrical grid to the second transformer. The second pre-magnetization current, particularly said superposition of the magnetization current from the primary winding of the first transformer and the alternating current electrical power output of the electrical grid, may be less than the current of the alternating current electrical power output flowing from the electrical grid to the second transformer. This provides the advantage that the overall inrush current of the electrolyzer power supply system, particularly of the transformers, can be reduced. Further, only one single converter being electrically connected to the direct current source is required to reduce the inrush currents of all transformers of the electrolyzer supply system. This allows a relatively easy and cheap installation in existing electrolyzer power supply systems.

In one embodiment, the electrolyzer power supply system further comprises a second converter which is electrically connected to the second transformer and adapted to provide a third pre-magnetization current to the second transformer from the direct current source, particularly when the first transformer is pre-magnetized above the pre-magnetization threshold value. In other words, the third pre-magnetization current may correspond to the first pre-magnetization current. The second converter may correspond to the first converter or comprise the same features, wherein in particular the second converter may be electrically connected to a different transformer than the first converter.

Additionally, the direct current source in combination with the second converter may be adapted to provide the second pre-magnetization current to the second transformer when the first transformer has been pre-magnetized above the pre-magnetization threshold value.

Alternatively, the direct current source in combination with the first converter may be adapted to provide the first pre-magnetization current to the first transformer and the second pre-magnetization current to the second transformer in combination with the second converter in parallel.

This provides the advantage that a redundancy for pre-magnetizing all transformers of the electrolyzer power supply system is provided.

In one embodiment, the first converter and/or the second converter is adapted to disconnect the direct current source, particularly when a voltage of the alternating current electrical power input and/or of the direct current electrical power input exceeds a voltage threshold value. In other words, the direct current source may be adapted to disconnect from the first converter and/or the second converter when a voltage of the alternating current electrical power input and/or of the direct current electrical power input exceeds the voltage threshold value.

Additionally or alternatively, the first converter and/or the second converter may be adapted to disconnect or override the direct current source when the voltage of the direct current electrical power input exceeds the voltage threshold value.

This provides the advantage that the direct current source can be protected.

The invention further relates to a method of pre-magnetizing a transformer of an electrolyzer power supply system comprising a first transformer and a first converter, particularly a self-commutated converter, wherein the first transformer converts an alternating current electrical power output from an electrical grid into an alternating current electrical power input for the first converter, wherein the first converter converts the alternating current electrical power input from the first transformer into a direct current electrical power input for an electrolyzer. The method comprises the step of:
- Providing a first pre-magnetization current from the direct current source to the first transformer by means of the first converter.

In other words, a static synchronous compensator (STATCOM)may be provided or formed by means of the first converter and the direct current source, wherein in particular the STATCOM may provide the first pre-magnetization current to the first transformer, particularly at a secondary winding of the first transformer. The STATCOM or the converter and the direct current source may provide a reactive power to the secondary winding of the first transformer which may initiate a pre-magnetization of the first transformer. The STATCOM or the converter and the direct current source may provide the first pre-magnetization current to at least one secondary winding of the first transformer.

This provides the advantage that the overall inrush current of the transformer, particularly of the first transformer, is reduced. This allows an improved start-up operation of an electrolysis plant or electrolysis system comprising said electrolyzer power supply system which is connected to an electrical grid with a relatively low SCR at the point of connection. Further, the use of the emergency power supply as the direct current source allows a retrofit installation by means of a software update.

The method also includes embodiments by which additional advantages are obtained.

In one embodiment, the method further comprises the step of:
- Electrically connecting the first transformer to the electrical grid once the first transformer is pre-magnetized above a pre-magnetization threshold value.

In other words, a first switch which connects the first transformer to the electrical grid may be closed, when the first transformer has been pre-magnetized above the pre-magnetization value. This provides the advantage that the inrush current flowing from the electrical grid to the sufficiently pre-magnetized first transformer is reduced.

In one embodiment, the method further comprises the step of:
- Electrically connecting the first transformer to a second transformer, particularly in parallel with the electrical grid, for providing a second pre-magnetization current to the second transformer from the first transformer, particularly when the first transformer is pre-magnetized above the pre-magnetization threshold value.

In other words, the first transformer and the second transformer may be electrically connected with each other and particularly to the electrical grind, such that the second pre-magnetization current from the primary winding of the first transformer may be provided to the primary winding of the second transformer, when the first transformer is pre-magnetized above the pre-magnetization threshold value.

This provides the advantage that the overall inrush current of the electrolyzer power supply system, particularly of the transformers, can be reduced. Further, only one single converter being electrically connected to the direct current source is required to reduce the inrush currents of all transformers of the electrolyzer supply system. This allows a relatively easy and cheap installation in existing electrolyzer power supply systems.

In one embodiment, the method further comprises the step of:
- Providing a third pre-magnetization current to the second transformer from the direct current source by means of a second converter, particularly when the first transformer is pre-magnetized above the pre-magnetization threshold value.

In other words, the direct current source may provide the respective pre-magnetization current to the respective transformer in combination with the respective converter in a sequence.

Alternatively, the direct current source may provide the respective pre-magnetization current to the respective transformer in parallel.

This provides the advantage that a redundancy for pre-magnetizing all transformers of the electrolyzer power supply system is provided.

In one embodiment, the method further comprises the step of:
- Disconnecting the direct current source from the first converter and/or the second converter, particularly when a voltage of the alternating current electrical power input and/or of the direct current electrical power input exceeds a voltage threshold value.

In other words, the direct current source may disconnect from the first converter and/or the second converter when a voltage of the alternating current electrical power input and/or of the direct current electrical power input exceeds a voltage threshold value.

Additionally or alternatively, the first converter and/or the second converter may disconnect or override the direct current electrical power source when the voltage of the direct current electrical power input exceeds the voltage threshold value.

This provides the advantage that the direct current source can be protected.

The invention further relates to a computer program comprising instructions which, when the program is executed by a computer and/or a controller, particularly by a converter controller and/or a transformer controller and/or an emergency power supply system controller, cause the computer and/or the controller to carry out the steps of said method.

The invention also relates to a computer-readable storage medium having stored thereon said computer program. In other words, the computer-readable storage medium may be a punched card, a (floppy) disk storage medium, a hard disk, a CD, a DVD, an USB (Universal Serial Bus) storage device, a RAM (Random Access Memory), a ROM (Read Only Memory) and/or an EPROM (Erasable Programmable Read Only Memory). Preferably, the computer-readable storage medium may be a RAM or a ROM, wherein particularly a flash memory is used. The computer readable-storage medium may also be a data communication network which allows downloading a program code, such as the Internet.

The invention further relates to a computer and/or a controller, particularly a converter controller and/or a transformer controller and/or an emergency power supply system controller, comprising said computer-readable storage medium having stored thereon said computer program and optionally means to execute said method.

The computer may be a personal computer (PC). The controller may be programmable logic controller (PLC). The computer and/or the controller may comprise at least one processor and said computer-readable storage medium, wherein the computer-readable storage medium comprises said computer program which, when executed by the at least one processor, cause the computer and/or the controller to perform the method as described above. In other words, the at least one processor may be a microprocessor and/or a microcontroller and/or a FPGA (Field Programmable Gate Array) and/or a DSP (Digital Signal Processor).

The invention also relates to a converter and/or a transformer for an electrolysis system comprising said controller. The converter may be a self-commutated converter such as an IGBT converter. The transformer may be a medium voltage (MV) to low voltage (LV) transformer and in particular be adapted to provide a low voltage electrical power input to the converter.

The invention also relates to an electrolysis system comprising said electrolyzer power supply system and/or said controller. The electrolysis system may comprise the electrolyzer power supply system and an electrolyzer which may be adapted to produce an energy carrier such as hydrogen by means of the direct current electrical power input.

The invention also relates to realizations comprising a combination of the features of several of the described embodiments.

### Brief description of the drawings

The present disclosure will be more readily appreciated by reference to the following detailed description when being considered in connection with the accompanying drawings in which:
- Figure 1: shows a schematic example of an electrolysis system comprising an electrolyzer power supply system; and
- Figure 2: shows a schematic flow chart of a method of pre-magnetizing a transformer of the electrolyzer power supply system.

The following is a more detailed description of the invention with reference to the accompanying drawings. In the figures, similar elements are identified by identical reference numbers and repeated description may be omitted to avoid redundancy.

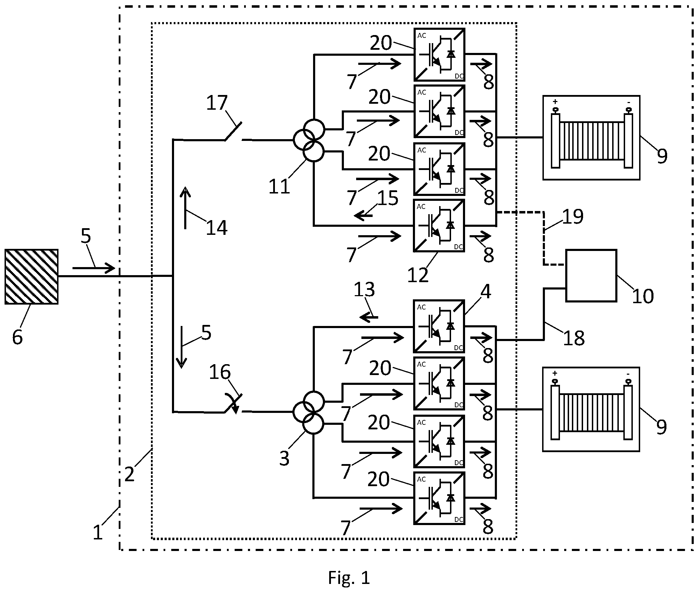

Figure 1 shows an electrolysis system 1 which comprises at least one electrolyzer 9 which are supplied with electric power by the electrolyzer power supply system 2. The electrolyzer power supply system 2 comprises at least one transformer 3, 11 which respectively convert an alternating current electrical power output 5 from the electrical grid 6 into an alternating current electrical power input 7 for the converter 4, 12, 20. The converter 4, 12, 20 respectively converts the alternating current electrical power input 7 into the direct current electrical power input 8 for the electrolyzer 9. For example, the electrolyzer power supply system 2 comprises two branches each having the first transformer 3 or the second transformer 11 which respectively provide the alternating current electrical power input 7 for the converters 4, 8, 12, 20 which respectively provide the direct current electrical power input 8 to the electrolyzer 9. In particular, the respective transformer 3, 11 receives the alternating current electrical power output 5 from the electrical grid 6 at their respective primary winding and outputs the alternating current electrical power input 7 to the converter 4, 12, 20 at their respective secondary winding.

When the transformers 3, 11 are connected to the electrical grid, for example, by closing the switches 16, 17, a large inrush current may occur which may trigger a series of start-up problems, particularly when the point of connection to the electrical grid has got a relatively low SCR. This may trigger safety-devices of the electrolysis system 1 and/or of the electrical grid 6 to shut down or disconnect the electrolysis system 1. Installing relatively large synchronous condensers may provide improvement for an unwanted shutdown due to relatively large inrush currents with respect to the SCR, but they are relatively expensive and require a relatively large space for installation. Another solution can be provided by pre-magnetizing the respective transformer 3, 11 before connecting the electrolysis system 1 or the electrolyzer power supply system 2 to the electrical grid 6. This allows a reduction of an inrush current and an improved compatibility with an electrical grid 6 having a relatively low SCR at the point of connection to the electrolyzer power supply system 2.

For pre-magnetizing the first transformer 3 of the electrolyzer power supply system 2, a first converter 4 is connected to a direct current source 10 on a direct current side of the first converter 4, where the first converter 4 is adapted to output the direct current electrical power input 8 for the electrolyzer 9. The first converter 4 is adapted to provide a first pre-magnetization current 13 from the direct current source 10 to the first transformer 3, particularly before connecting the first transformer 3 to the electrical grid 6. For this, the first converter 4 is adapted to convert the direct current from the direct current source 10 into an alternating current which pre-magnetizes the first transformer 3. The first transformer 3 can be pre-magnetized until a pre-magnetization threshold value of the first transformer 3 has been reached. Then, the first transformer 3 can be connected to the electrical grid 6, for example by closing the first switch 16, with a reduced inrush current. The first pre-magnetization current 13 initiates a pre-magnetization of the first transformer 3, particularly at a secondary winding of the first transformer 3, with an inrush current that is less than the inferior current at a rated voltage of the first transformer 3, particular at a primary winding of the first transformer 3. This allows the electrolysis system 1 to be suitable for electrical grids 6 which have a relatively low SCR.

The direct current source 10 can be any direct current source. For example, the direct current source can comprise an emergency power supply system, particularly an uninterruptable power supply of the electrolysis system 1. This allows that no further components must be installed such that existing electrolysis systems 1 comprising the emergency power supply, particularly the uninterruptible power supply, can be equipped with said pre-magnetization functionality by means of a software update.

Additionally, the electrolyzer power supply system 2 can further comprise a second transformer 11 which also must be pre-magnetized for reducing said inrush currents. The second transformer 2 may correspond to the first transformer 1, e.g. the second transformer 11 may comprise the same features as the first transformer 3. For pre-magnetizing the second transformer 11, the electrolyzer power supply system 2 is adapted to electrically connect the first transformer 3 and the second transformer 11, particularly in parallel with the electrical grid 6 as shown in Figure 1, for instance. When the first transformer 3 is pre-magnetized above the pre-magnetization threshold value, the first switch 16 and the second switch 17 can be closed such that the first transformer 3 provides a second pre-magnetization current 14 to the second transformer 11. The second pre-magnetization current can be a combination or a superposition of the alternating current electrical power output 5 from the electrical grid 6 and the pre-magnetization current from the primary winding of the first transformer 3, particularly when the first transformer 3 has been pre-magnetized above the first pre-magnetization threshold value. This reduces the inrush current of the second transformer 11, particularly at the primary winding of the second transformer 11.

Alternatively, the electrolyzer power supply system 2 further comprises a second converter 12 which is electrically connected to the second transformer 11 and is adapted to provide a third pre-magnetization current 15 to the second transformer 11 from the direct current source 10. The third pre-magnetization current 15 may correspond to the first pre-magnetization current 13. The second converter 12 is also electrically connected to the direct current source 10 on the direct current side of the second converter 12, particularly by means of the second electrical connection 19.

Additionally, the direct current source 10 in combination with the second converter 12 provides the third pre-magnetization current 15 to the second transformer 11 when the first transformer 3 has been pre-magnetized above the pre-magnetization threshold value.

Alternatively, the direct current source 10 in combination with the second converter 12 provides the third pre-magnetization current 15 to the second transformer 11 in parallel to providing the first pre-magnetization current 13 to the first transformer 3 in combination with the first converter 4. For this, the direct current source 10 may be adapted to provide one or more pre-magnetization currents 13, 15 simultaneously.

The first converter 4 and/or the second converter 12 is adapted to disconnect the direct current source 10, particularly when a voltage of the alternating current electrical power input 7 and/or of the direct current electrical power input 8 exceeds a voltage threshold value. This allows protection of the direct current source 10 when the first converter 4 and/or the second converter 8 enter in an electrolysis operation mode where they respectively provide the direct current electrical power input 8 to the electrolyzer 9.

Additionally or alternatively, the first converter 4 and/or the second converter 12 may disconnect or override the direct current electrical power source 10 when the voltage of the direct current electrical power input 8 exceeds the voltage threshold value.

Once the first transformer 3 has been pre-magnetized, the electrolyze power supply system 2, particularly the first transformer 3 and the first converter 4, may enter a grid connected mode, which comprises an operation of providing the direct current electrical power input 8 to the electrolyzer 9 for producing an energy carrier by means of an electrolysis process. The energy carrier may be hydrogen, for example.

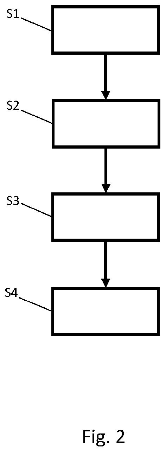

Figure 2 schematically shows a flow chart of a method for pre-magnetizing a transformer 2, 11 of an electrolyzer power supply system 2, in particular executable by a controller. As a starting condition, the electrolysis system 1 is disconnected from the electrical grid 6. Thus, switches 16, 17 in Figure 1 are open.

In a first step S1, a first pre-magnetization current 13 from the direct current source 10 is provided to the first transformer 3 by means of the first converter 4.

In a second step S2, the first transformer 3 is electrically connected to the electrical grid 6 once the first transformer 3 is pre-magnetized above a pre-magnetization threshold value.

In a third step S3, the first transformer 3 is electrically connected to a second transformer 11, particularly in parallel with the electrical grid 6, for providing a second pre-magnetization current 14 to the second transformer 11 from the first transformer 3, particularly when the first transformer 3 has been pre-magnetized above the pre-magnetization threshold value in step S1.

Alternatively, a third pre-magnetization current 15 may be provided to the second transformer 11 from the direct current source 10 by means of a second converter 12, particularly when the first transformer 3 is pre-magnetized above the pre-magnetization threshold value. Here, the second transformer 11 may be still disconnected from the electrical grid 6. The second transformer 11 may be connected to the electrical grid 6, when the second transformer has been pre-magnetized above the pre-magnetization threshold value.

When the third-pre-magnetization current 15 is provided to the second transformer 11 from the direct current source 10 and the second converter 12, steps S1 and S3 may be performed in a sequency or simultaneously.

If steps S1 and S3 are performed simultaneously, the second transformer 11 may be electrically connected to the electrical grid in step S2 in addition to the first transformer 3.

In a fourth step S4, the direct current source 10 is disconnected from the first converter 4 and/or the second converter 12, particularly when a voltage of the alternating current electrical power input 7 and/or of the direct current electrical power input 8 exceeds a voltage threshold value.

Additionally or alternatively, the first converter 4 and/or the second converter 12 may disconnect or override the direct current electrical power source 10 when the voltage of the direct current electrical power input 8 exceeds the voltage threshold value.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

## Claims

1. Electrolyzer power supply system (2) comprising a first transformer (3) and a first converter (4), particularly a self-commutated converter, wherein the first transformer (3) is adapted to convert an alternating current electrical power output (5) from an electrical grid (6) into an alternating current electrical power input (7) for the first converter (4), wherein the first converter (4) is adapted to convert the alternating current electrical power input (7) from the first transformer (3) into a direct current electrical power input (8) for an electrolyzer (9),
**characterized in that**
the first converter (4) is adapted to provide a first pre-magnetization current (13) from a direct current source (10) to the first transformer (3).

2. Electrolyzer power supply system (2) according to claim 1, **characterized in that** further comprising a second transformer (11) and being adapted to electrically connect the first transformer (3) and the second transformer (11), particularly in parallel with the electrical grid (6), for providing a second pre-magnetization current (14) to the second transformer (11) from the first transformer (3), particularly when the first transformer (3) is pre-magnetized above a pre-magnetization threshold value.

3. Electrolyzer power supply system (2) according to one of the preceding claims, **characterized in that** further comprising a second converter (12) which is electrically connected to the second transformer (11) and adapted to provide a third pre-magnetization current (15) to the second transformer (11) from the direct current source (10), particularly when the first transformer (3) is pre-magnetized above the pre-magnetization threshold value.

4. Electrolyzer power supply system (2) according to one of the preceding claims, **characterized in that** the first converter (4) and/or the second converter (12) is adapted to disconnect the direct current source (10), particularly when a voltage of the alternating current electrical power input (7) and/or of the direct current electrical power input (8) exceeds a voltage threshold value.

5. Method of pre-magnetizing a transformer of an electrolyzer power supply system (2) comprising a first transformer (3) and a first converter (4), particularly a self-commutated converter, wherein the first transformer (3) converts an alternating current electrical power output (5) from an electrical grid (6) into an alternating current electrical power input (7) for the first converter (4), wherein the first converter (4) converts the alternating current electrical power input (7) from the first transformer (3) into a direct current electrical power input (8) for an electrolyzer (9), comprising the step of:
- Providing a first pre-magnetization current (13) from the direct current source (10) to the first transformer (3) by means of the first converter (4).

6. Method according to claim 5, further comprising the step of:
- Electrically connecting the first transformer (3) to the electrical grid (6) once the first transformer (3) is pre-magnetized above a pre-magnetization threshold value.

7. Method according to claim 5 or 6, further comprising the step of:
- Electrically connecting the first transformer (3) to a second transformer (11), particularly in parallel with the electrical grid (6), for providing a second pre-magnetization current (14) to the second transformer (11) from the first transformer (3), particularly when the first transformer (3) is pre-magnetized above the pre-magnetization threshold value.

8. Method according to one of the claims 5 to 7, further comprising the step of:
- Providing a third pre-magnetization current (15) to the second transformer (11) from the direct current source (10) by means of a second converter (12), particularly when the first transformer (3) is pre-magnetized above the pre-magnetization threshold value.

9. Method according to one of the claims 5 to 8, further comprising the step of:
- Disconnecting the direct current source (10) from the first converter (4) and/or the second converter (12), particularly when a voltage of the alternating current electrical power input (7) and/or of the direct current electrical power input (8) exceeds a voltage threshold value.

10. Computer program comprising instructions which, when the program is executed by a computer and/or a controller, particularly a converter controller and/or a transformer controller and/or an emergency power supply system controller, cause the computer and/or the controller to carry out the steps of the method of one of the claims 5 to 9.

11. Computer-readable storage medium having stored thereon the computer program of claim 10.

12. Computer and/or a controller, particularly a converter controller and/or a transformer controller and/or an emergency power supply system controller, comprising the computer-readable storage medium of claim 11 and optionally means to execute of the method of one of the claims 5 to 9.

13. Converter and/or a transformer for an electrolysis system comprising the controller of claim 12.

14. Electrolysis system (1) comprising the electrolyzer power supply system (2) of one of the claims 1 to 4 and/or comprising the controller of claim 12.

15. Electrolysis system (1) of claim 14, **characterized in that** further comprising the direct current source (10) which particularly comprises an emergency power supply system.
